# EUROPÄISCHE PATENTSCHRIFT

(11) **EP 4 575 697 B1**
(45) Veröffentlichungstag und Bekanntmachung des Hinweises auf die Patenterteilung: **21.01.2026**
(21) Anmeldenummer: 24220243.0
(22) Anmeldetag: 16.12.2024
(51) Int. Cl.: G05D 1/242, G05D 1/622, G05D 105/28, G05D 107/70, G05D 109/10, G05D 111/10

(54) **AUTONOM FAHRENDES TRANSPORTSYSTEM UND EIN VERFAHREN ZUM BETRIEB EINES SOLCHEN AUTONOM FAHRENDEN TRANSPORTSYSTEMS**
AUTONOMOUSLY DRIVING TRANSPORT SYSTEM AND A METHOD FOR OPERATING SUCH AUTONOMOUSLY DRIVING TRANSPORT SYSTEM
SYSTÈME DE TRANSPORT À CONDUITE AUTONOME ET PROCÉDÉ DE FONCTIONNEMENT D'UN TEL SYSTÈME DE TRANSPORT À CONDUITE AUTONOME

(30) Priorität: 21.12.2023 DE 102023136270
(43) Veröffentlichungstag der Anmeldung: 25.06.2025
(73) Patentinhaber: SICK AG, 79183 Waldkirch (DE)
(72) Erfinder: STEIN, Patrick, 79189 Bad Krozingen (DE)
(74) Vertreter: Manitz Finsterwald Patent- und Rechtsanwaltspartnerschaft mbB

(56) Entgegenhaltungen:
- KR-A- 20150 105 930
- US-A1- 2015 274 165
- US-B2- 10 597 074

## Beschreibung

Die Erfindung betrifft ein autonom fahrendes Transportsystem, insbesondere zum Transport von Waren, und ein Verfahren zum Betrieb eines solchen autonom fahrenden Transportsystems.

Die Druckschrift KR 2015 0105930 A beschreibt beispielsweise ein autonom fahrendes Transportsystem gemäß dem Oberbegriff des Anspruchs 1 und ein Verfahren zum Betrieb eines autonom fahrenden Transportsystems gemäß dem Oberbegriff des Anspruchs 14. Die Druckschriften US 2015/274165 A1 und US 10 597 074 B2 beschreiben verwandte Systeme und Verfahren.

Das autonom fahrende Transportsystem (AGV - Automated Guided Vehicle) kann beispielsweise in Form eines autonom fahrenden Staplers ausgebildet sein, insbesondere in Form eines Gabelstaplers zum Transport von Paletten und/oder Gitterboxen.

Damit autonom fahrende Transportsysteme sicher zum Ziel kommen, verfügen diese über Umgebungssensoren, die Schutzfelder überwachen, um dadurch die Umgebung auf Hindernisse abtasten zu können. Diese Umgebungssensoren führen häufig zu erheblichen Produktivitätsverlusten, weil sie unflexibel gegenüber sich veränderten Umgebungsbedingungen sind und dadurch oft zum Not-Stopp oder zu einer verlangsamten Fahrt des autonom fahrenden Transportsystems führen. Beispielsweise ermöglichen die von den Umgebungssensoren überwachten Schutzfelder keine flexible und produktive Reaktion auf immobile Objekte, wie zum Beispiel Wände oder sich dynamisch verändernde Umgebungen. Das Umschalten von Schutzfeldern in Abhängigkeit der Fahrzeugbewegung und Umgebung ist umständlich, unflexibel und auf die maximale Anzahl der Schutzfeld-Konfigurationen beschränkt.

Es ist daher die Aufgabe der hier vorliegenden Erfindung ein autonom fahrendes Transportsystem zu schaffen, welches sich effizient durch die Umgebung bewegt, ohne dabei Personen- und Sachschäden zu verursachen.

Die Aufgabe wird durch das autonom fahrende Transportsystem gemäß dem unabhängigen Anspruch 1 gelöst. Der Anspruch 14 beschreibt ein Verfahren zum Betrieb eines solchen autonom fahrenden Transportsystems. Die Ansprüche 2 bis 13 beschreiben Weiterbildungen des autonom fahrenden Transportsystems.

Das erfindungsgemäße autonom fahrende Transportsystem, insbesondere zum Transport von Waren, umfasst eine Steuerungsvorrichtung, eine Hinderniserkennungseinrichtung und eine Antriebseinheit. Die Antriebseinheit ist dazu ausgebildet, um das autonom fahrende Transportsystem entlang einer Fahrtroute mit einem bestimmten Fahrparameter zu bewegen. Bei dem Fahrparameter handelt es sich insbesondere um eine Geschwindigkeit, einen Lenkeinschlag und/oder eine Beschleunigung. Die Geschwindigkeit kann dabei sowohl durch zumindest einen Motor, wie einen Elektromotor oder einen Verbrennungsmotor, als auch durch ein Bremssystem reguliert werden. Der Fahrparameter kann für jede Position auf der Fahrtroute unterschiedlich gewählt sein. Die Hinderniserkennungseinrichtung ist dazu ausgebildet, um in einem Überwachungsbereich des autonom fahrenden Transportsystems ein Objekt zu detektieren und eine entsprechende Objektinformation, die vorzugsweise zumindest die Position und optional Geschwindigkeit und/oder Bewegungsrichtung des Objekts umfasst, an die Steuerungsvorrichtung zu übertragen. Der Überwachungsbereich erstreckt sich dabei zumindest in Fahrtrichtung, sodass zumindest Objekte, die sich in Bewegungsrichtung des autonom fahrenden Transportsystems vor dem autonom fahrenden Transportsystem befinden, detektiert werden. Die Position des Objekts kann einerseits absolut, beispielsweise durch Koordinaten, in der Objektinformation angegeben werden oder relativ, beispielsweise mit einem Abstand und einer Winkellage zum autonom fahrenden Transportsystem. Die Steuerungsvorrichtung ist dazu ausgebildet, um den Überwachungsbereich in einen Fahrkorridor und in zumindest einen ersten Nebenkorridor zu unterteilen. Dabei kann der gesamte Überwachungsbereich oder nur ein Teil des Überwachungsbereichs in den Fahrkorridor und in den zumindest einen ersten Nebenkorridor unterteilt werden. Die Fahrtroute selbst verläuft dabei durch den Fahrkorridor. Die Fahrtroute ist die geplante Route, die das autonom fahrende Transportsystem in der Zukunft zurücklegen wird. Die Steuerungsvorrichtung ist dazu ausgebildet, um anhand der Objektinformation zu ermitteln, ob sich das detektierte Objekt im Fahrkorridor oder in dem zumindest einen ersten Nebenkorridor befindet. Die Steuerungsvorrichtung ist weiter dazu ausgebildet, um zumindest einen Fahrparameter anders anzupassen, wenn sich das Objekt im ersten Nebenkorridor befindet als wenn sich das Objekt im Fahrkorridor befindet.

Es ist besonders vorteilhaft, dass der Überwachungsbereich in einen Fahrkorridor und in zumindest einen ersten Nebenkorridor unterteilt wird. Objekte, die im Fahrkorridor detektiert werden, stellen ein größeres Sicherheitsrisiko für das autonom fahrende Transportsystem dar als Objekte, die sich im ersten Nebenkorridor befinden. Wird ein Objekt im Fahrkorridor detektiert, so kann das autonom fahrende Transportsystem beispielsweise angehalten werden, wohingegen ein solches detektierte Objekt im ersten Nebenkorridor zu keiner oder lediglich einer reduzierten Fahrgeschwindigkeit des autonom fahrenden Transportsystems führt. Insgesamt wird dadurch das autonom fahrende Transportsystem deutlich effizienter betrieben, wobei weiterhin eine hohe Sicherheitsanforderung erfüllt ist. Anstelle von einem "Fahrkorridor" kann auch von einem "Fahrschlauch" gesprochen werden.

In einer vorteilhaften Ausführungsform ist die Breite des Fahrkorridors derart gewählt, dass das autonom fahrende Transportsystem bezogen auf seine Abmessungen, auch mit etwaigen zu transportierenden Waren, stets innerhalb des Fahrkorridors liegt. Der Fahrkorridor ist vorzugweise mehr als 1m oder mehr als 2m aber weniger als 2,50m breiter als das autonom fahrende Transportsystem.

In einer vorteilhaften Ausführungsform ist der zumindest eine erste Nebenkorridor bezüglich seiner Anordnung zum Fahrkorridor derart gewählt, dass ein stationäres Objekt innerhalb des ersten Nebenkorridors nicht mit dem autonom fahrenden Transportsystem kollidiert, welches sich entlang seiner Fahrtroute bewegt.

In einer vorteilhaften Ausführungsform ist die Steuerungsvorrichtung dazu ausgebildet, um bei einem detektierten Objekt im Fahrkorridor den Fahrparameter derart einzustellen, dass das autonom fahrende Transportsystem anhält. Es ist auch möglich, dass das autonom fahrende Transportsystem seine Geschwindigkeit, bezogen auf eine maximale zulässige Geschwindigkeit für die aktuelle Position auf der Fahrroute, reduziert bzw. mit der maximal zulässigen Geschwindigkeit für die aktuelle Position auf der Fahrroute fährt. Dadurch wird ein sehr hoher Sicherheitsstandard erreicht.

In einer vorteilhaften Ausführungsform ist die Steuerungsvorrichtung dazu ausgebildet, um anhand der Objektinformation eine Distanz des im Fahrkorridor detektierten Objekts zum autonom fahrenden Transportsystem zu ermitteln, um für den Fall, dass die Distanz einen ersten Abstandswert unterschreitet den Fahrparameter derart einzustellen, dass das Transportsystem anhält und für den Fall, dass die Distanz den ersten Abstandswert überschreitet oder einen zweiten Abstandswert, der größer als der erste Abstandswert ist, unterschreitet, die Fahrtroute und damit den Fahrkorridor derart neu festzulegen, dass sich das detektierte Objekt nicht mehr im neuen Fahrkorridor befindet. Die Distanz des Objekts zum autonom fahrenden Transportsystem kann zu jedem Teil des autonom fahrenden Transportsystems, wie beispielsweise einer Vorderkante, ermittelt werden. Die Distanz kann auch zur Hinderniserkennungseinrichtung hin ermittelt werden. Es ist besonders vorteilhaft, dass für den Fall, dass sich das detektierte Objekt noch entfernt vom autonom fahrenden Transportsystem befindet, die Route des autonom fahrenden Transportsystems entsprechend frühzeitig angepasst wird. Dadurch kommt es zu keinem Anhalten und vorzugsweise auch zu keiner Geschwindigkeitsreduktion des autonom fahrenden Transportsystems, wodurch die Effizienz gesteigert wird. Wird der Fahrkorridor neu festgelegt, so gilt dies auch für den zumindest einen ersten Nebenkorridor.

In einer vorteilhaften Ausführungsform ist die Steuerungsvorrichtung dazu ausgebildet, um die neue Fahrtroute an ein übergeordnetes Leit- und/oder Steuerungssystem zu kommunizieren.

In einer vorteilhaften Ausführungsform ist die Steuerungsvorrichtung dazu ausgebildet, um detektierte Objekte und deren ermittelten Objekteigenschaften an ein übergeordnetes Leit- und/oder Steuerungssystem zu kommunizieren.

In einer vorteilhaften Ausführungsform ist die Steuerungsvorrichtung dazu ausgebildet, um detektierte Objekte und deren ermittelten Objekteigenschaften an ein anderes autonom fahrendes Transportsystem zu kommunizieren.

In einer vorteilhaften Ausführungsform ist die Steuerungsvorrichtung dazu ausgebildet, um von einem übergeordneten Leit- und/oder Steuerungssystem Objekte und deren Objekteigenschaften zu empfangen, die von einem anderen autonom fahrenden Transportsystem detektiert wurden. Das autonom fahrende Transportsystem ist dann dazu ausgebildet, um den Fahrparameter entsprechend der empfangenen Objekte nebst den zugehörigen Objekteigenschaften anzupassen. Die Steuerungsvorrichtung ist vorzugsweise dazu ausgebildet, um empfangene Objekte, die stationär angeordnet sind, länger für die Ermittlung des aktuellen Fahrparameters zu verwenden als empfangene Objekte, die sich bewegen.

In einer vorteilhaften Ausführungsform ist die Steuerungsvorrichtung dazu ausgebildet, um von einem anderen autonom fahrenden Transportsystem detektierte Objekte nebst deren ermittelten Objekteigenschaften zu empfangen.

In einer vorteilhaften Ausführungsform ist die Steuerungsvorrichtung dazu ausgebildet, um je nach Objektinformation des im Fahrkorridor detektierten Objekts, die neue Fahrtroute unterschiedlich zu berechnen. Handelt es sich um ein großes Objekt und/oder um ein Objekt, welches sich bewegt, insbesondere schnell bewegt, so verläuft die neue Fahrtroute zumindest in dem Bereich des Objekts weiter entfernt von der alten Fahrtroute als wenn das Objekt kleiner und/oder stationär angeordnet ist.

In einer vorteilhaften Ausführungsform schließt sich der erste Nebenkorridor unmittelbar an den Fahrkorridor zu dessen Seite hin an. Dadurch wird die Sicherheit erhöht. Der ersten Nebenkorridor kann genauso breit wie der Fahrkorridor oder schmaler oder breiter sein. Der erste Nebenkorridor kann sich genauso weit oder weiter oder weniger weit wie der Fahrkorridor von dem autonom fahrenden Transportsystem weg erstrecken.

In einer vorteilhaften Ausführungsform sind der Hauptkorridor und/oder der zumindest eine erste Nebenkorridor in ihrer Form beliebig festlegbar. Die Form des Hauptkorridors und/oder des zumindest einen ersten Nebenkorridors verläuft lediglich im Überwachungsbereich der Hinderniserkennungseinrichtung. In einer Ausführungsform umfasst der Hauptkorridor und/oder der zumindest eine erste Nebenkorridor zumindest einen kurvenförmigen Verlauf.

In einer vorteilhaften Ausführungsform schließt sich der erste Nebenkorridor sowohl unmittelbar an der linken Seite des Fahrkorridors und unmittelbar an der rechten Seite des Fahrkorridors an diesen an. Der Fahrkorridor ist daher auf zwei Seiten von dem ersten Nebenkorridor umgeben.

In einer vorteilhaften Ausführungsform ist der Fahrkorridor und der erste Nebenkorridor lediglich durch eine, beispielsweise manuelle oder automatische Markierung bestimmter Bereiche im Überwachungsbereich gebildet. Die Hinderniserkennungseinrichtung ist dazu ausgebildet, um Objekte im gesamten Überwachungsbereich zu detektieren. Zumindest ein Teil des Überwachungsbereichs oder der ganze Überwachungsbereich kann, insbesondere softwareseitig, in den Fahrkorridor und in den ersten Nebenkorridor untergliedert werden. Aufgrund der Objektinformation, die beispielsweise die Position des Objekts beinhaltet, ist die Steuerungsvorrichtung oder die Hinderniserkennungseinrichtung dazu ausgebildet, um zu ermitteln, ob sich das Objekt nun in einem Bereich innerhalb des Überwachungsbereichs befindet, welcher dem Fahrkorridor oder dem zumindest einen ersten Nebenkorridor zugeordnet wird.

In einer vorteilhaften Ausführungsform ist die Steuerungsvorrichtung dazu ausgebildet, um den Fahrkorridor und den zumindest einen ersten Nebenkorridor in Abhängigkeit der Fahrtroute automatisch bezogen auf den Überwachungsbereich festzulegen.

In einer vorteilhaften Ausführungsform handelt es sich bei der Objektinformation um eine Position des Objekts im Überwachungsbereich und/oder um eine Geschwindigkeit des Objekts und/oder um eine Bewegungsrichtung des Objekts. Die Position kann dabei in absoluten Koordinaten, wie beispielsweise kartesischen Koordinaten, angegeben sein. Die Position kann aber auch mit Polarkoordinaten, in Bezug auf die Position des autonom fahrenden Transportsystems, angegeben sein. Bevorzugt beinhaltet die Objektinformation sowohl die Position, als auch die Geschwindigkeit und die Bewegungsrichtung. Bewegt sich das Objekt nämlich von der Fahrtroute weg, so muss der Fahrparameter nicht dahingehend angepasst werden, dass sich die Geschwindigkeit des autonom fahrenden Transportsystems verringert.

In einer vorteilhaften Ausführungsform ist die Steuerungsvorrichtung dazu ausgebildet, um anhand der Objektinformation eines im ersten Nebenkorridor detektierten Objekts den Fahrparameter derart einzustellen, dass das autonom fahrende Transportsystem anhält, bzw. seine Geschwindigkeit, bezogen auf eine maximale zulässige Geschwindigkeit für die aktuelle Position auf der Fahrroute, reduziert, bzw. mit der maximal zulässigen Geschwindigkeit für die aktuelle Position auf der Fahrroute fährt. Die maximal zulässige Geschwindigkeit kann auch die Höchstgeschwindigkeit des autonom fahrenden Transportsystems umfassen. In diesem Fall ist der erste Nebenkorridor in drei unterschiedliche Bereiche gegliedert. In einem ersten Bereich, der auch als Haltebereich bezeichnet werden kann, findet in Abhängigkeit der Objektinformation ein Anhalten des autonom fahrenden Transportsystems statt. Dies kann beispielsweise dann erfolgen, wenn das Objekt einen Mindestabstand zum autonom fahrenden Transportsystem unterschreitet oder sich in eine Richtung und/oder mit einer Bewegungsgeschwindigkeit bewegt, die zu einem hohen Kollisionsrisiko führt. In einem zweiten Bereich, der auch als adaptiver Fahrbereich bezeichnet werden kann, findet eine konstante Änderung des Fahrparameters, insbesondere der Geschwindigkeit, mit welcher das autonom fahrende Transportsystem fährt, in Abhängigkeit der fortlaufend detektierten Objektinformation statt. In dem adaptiven Fahrbereich ist die Geschwindigkeit, mit welcher sich das autonom fahrende Transportsystem bewegt, größer Null aber kleiner als eine für die aktuelle Position auf der Fahrtroute zulässige Geschwindigkeit und/oder kleiner als die Höchstgeschwindigkeit des autonom fahrenden Transportsystems. In einem dritten Bereich, der auch als normaler Fahrbereich bezeichnet werden kann, bewegt sich das autonom fahrende Transportsystem mit der maximal zulässigen Geschwindigkeit für die aktuelle Position auf der Fahrtroute. Diese maximal zulässige Geschwindigkeit kann auch die Höchstgeschwindigkeit für das autonom fahrende Transportsystem umfassen. Kann sich ein autonom fahrendes Transportsystem mit einer Höchstgeschwindigkeit von 10 km/h bewegen und ist für einen Punkt auf der Fahrtroute eine Höchstgeschwindigkeit von 5 km/h festgelegt, so handelt es sich bei den 5 km/h auf die maximal zulässige Geschwindigkeit. Ist auf der Fahrtroute eine Höchstgeschwindigkeit von 15 km/h festgelegt, so kann sich das autonom fahrende Transportsystem mit einer Geschwindigkeit von 10 km/h bewegen, was in diesem Fall die maximal zulässige Geschwindigkeit darstellt.

In einer vorteilhaften Ausführungsform ist die maximal zulässige Geschwindigkeit abhängig von der Beladung des autonom fahrenden Transportsystems und/oder von der Art, wie beispielsweise der Motorleistung oder Bremskraft, des autonom fahrenden Transportsystems.

In einer vorteilhaften Ausführungsform ist die Steuerungsvorrichtung dazu ausgebildet, um den Fahrparameter noch in Abhängigkeit des Gewichts, insbesondere von den zu transportierenden Waren, auszuwählen. Ein höheres Gewicht resultiert in einem längeren Bremsweg, sodass die Fahrgeschwindigkeit durch die Steuerungsvorrichtung reduziert wird.

In einer vorteilhaften Ausführungsform ist die Hinderniserkennungseinrichtung dazu ausgebildet, um die Objektinformation fortlaufend zu aktualisieren. Insbesondere wird die Objektinformation mehrmals pro Sekunde aktualisiert. Die Steuerungsvorrichtung ist vorzugsweise ebenfalls dazu ausgebildet, um fortlaufend zu ermitteln, ob sich das detektierte Objekt bezüglich seiner aktualisierten Objekteigenschaften, im Fahrkorridor oder in dem zumindest einen ersten Nebenkorridor befindet.

In einer vorteilhaften, Ausführungsform ist die Steuerungsvorrichtung bei Detektion eines Objekts im ersten Nebenkorridor dazu ausgebildet, um den Fahrparameter derart einzustellen, dass die Fahrgeschwindigkeit des autonom fahrenden Transportsystems in Abhängigkeit der Distanz des detektierten Objekts von dem autonom fahrenden Transportsystem und/oder in Abhängigkeit der Geschwindigkeit des detektierten Objekts und/oder in Abhängigkeit der Bewegungsrichtung des detektierten Objekts einstellbar ist. Dadurch kann auf unterschiedliche Risiken optimal reagiert werden.

In einer vorteilhaften Ausführungsform ist die Fahrgeschwindigkeit des autonom fahrenden Transportsystems und die Distanz des detektierten Objekts und/oder die Geschwindigkeit des detektierten Objekts und/oder die Bewegungsrichtung des detektierten Objekts über eine lineare oder nicht-lineare, insbesondere quadratische oder logarithmische, Funktion miteinander verknüpft. Dadurch ist eine Gewichtung möglich.

In einer vorteilhaften Ausführungsform umfasst die Steuerungsvorrichtung eine Look-Up-Tabelle, in welcher für verschiedene Objekteigenschaften ein Fahrparameter, insbesondere in Form einer Geschwindigkeit, hinterlegt ist. Die Look-Up-Tabelle kann dabei zweidimensional oder mehrdimensional sein. Bei einer zweidimensionalen Look-Up-Tabelle gibt es für einen Distanzwert zumindest einen Fahrparameter. Bei einer mehrdimensionalen Look-Up-Tabelle gibt es für einen Distanzwert und eine Geschwindigkeit und eine Bewegungsrichtung des Objekts zumindest einen Fahrparameter. Grundsätzlich ist es auch denkbar, dass anstelle einer Look-Up-Tabelle über eine mathematische Funktion der entsprechende zumindest eine Fahrparameter berechnet wird.

In einer vorteilhaften, erfindungsgemäßen Ausführungsform ist die Steuerungsvorrichtung bei Detektion eines Objekts im ersten Nebenkorridor dazu ausgebildet, um den Fahrparameter derart einzustellen, dass die Fahrgeschwindigkeit des autonom fahrenden Transportsystems mit zunehmender Entfernung des Objekts von dem autonom fahrenden Transportsystem höher ist und/oder mit zunehmender Geschwindigkeit des Objekts in Richtung der Fahrtroute des autonom fahrenden Transportsystems niedriger ist und/oder mit zunehmender Geschwindigkeit des Objekts weg von der Fahrtroute des autonom fahrenden Transportsystems höher ist. Der Zusammenhang zwischen der Fahrgeschwindigkeit des autonom fahrenden Transportsystems und der Entfernung des Objekts kann linear oder nicht-linear sein. Selbiges gilt auch für die Geschwindigkeit und Bewegungsrichtung des Objekts. Durch eine derartige Differenzierung bzgl. des Fahrparameters des autonom fahrenden Transportsystems wird vermieden, dass das autonom fahrende Transportsystem zu stark abbremst bzw. direkt anhält, wodurch die Transportleistung insgesamt ineffizienter werden würde.

In einer vorteilhaften Ausführungsform ist die Steuerungsvorrichtung bei Detektion eines Objekts im ersten Nebenkorridor dazu ausgebildet um für den Fall, dass:
a) eine Distanz zwischen dem Objekt und dem autonom fahrenden Transportsystem kleiner als ein erster Distanzwert ist, den Fahrparameter derart einzustellen, dass das autonom fahrende Transportsystem anhält;
b) eine Distanz zwischen dem Objekt und dem autonom fahrenden Transportsystem größer als der erster Distanzwert und kleiner als ein zweiter Distanzwert ist, den Fahrparameter für die Geschwindigkeit des autonom fahrenden Transportsystems in Abhängigkeit der Distanz einzustellen, wobei der Geschwindigkeitswert mit zunehmender Distanz größer gewählt wird. Der Geschwindigkeitswert ist dabei größer Null. Bevorzugt ist der Geschwindigkeitswert allerdings kleiner als der maximal zulässige Geschwindigkeitswert für die aktuelle Position auf der Fahrroute.
c) eine Distanz zwischen dem Objekt und dem autonom fahrenden Transportsystem größer als der zweite Distanzwert ist, den Fahrparameter für die Geschwindigkeit des autonom fahrenden Transportsystems auf einen maximal zulässigen Geschwindigkeitswert für die aktuelle Position auf der Fahrroute einzustellen.

In diesem Fall können weitere Bereiche in den ersten Nebenkorridor eingezeichnet werden, um den Fahrparameter bezogen auf die Distanz des detektierten Objekts zu visualisieren. Grundsätzlich ist es möglich, dass neben der Distanz auch noch die Geschwindigkeit und die Bewegungsrichtung des Objekts mitberücksichtigt wird.

In einer vorteilhaften Ausführungsform ist die Steuerungsvorrichtung dazu ausgebildet, den Überwachungsbereich noch mindestens in einen zweiten Nebenkorridor zu unterteilen, wobei der erste Nebenkorridor zwischen dem Fahrkorridor und dem zweiten Nebenkorridor angeordnet ist. Die Steuerungsvorrichtung ist weiter dazu ausgebildet, um bei einer Detektion eines Objekts im zweiten Nebenkorridor, welches dieselbe Distanz zum autonom fahrenden Transportsystem umfasst und/oder dieselbe Geschwindigkeit und/oder dieselbe Bewegungsrichtung wie ein Objekt, welches im ersten Nebenkorridor detektiert wird, einen Fahrparameter derart anzupassen, dass die Geschwindigkeit, mit welcher sich das autonom fahrende Transportsystem bewegt, höher ist, wenn ein solches Objekt im zweiten Nebenkorridor detektiert wird als im ersten Nebenkorridor. Mit anderen Worten wird dadurch dem autonom fahrenden Transportsystem eine höhere Fahrgeschwindigkeit erlaubt, wenn sich ein Objekt in dem zweiten Nebenkorridor befindet bezogen auf ein Objekt im ersten Nebenkorridor, obwohl die Distanz zum autonom fahrenden Transportsystem identisch ist oder obwohl die Geschwindigkeit und Bewegungsrichtung des Objekts identisch sind. Der zweite Nebenkorridor ist dabei weiter vom Fahrkorridor beabstandet als der erste Nebenkorridor.

In einer vorteilhaften Ausführungsform weist die Steuerungsvorrichtung Objekten mit denselben Objekteigenschaften wie Distanz, Geschwindigkeit und/oder Bewegungsrichtung im zweiten Nebenkorridor ein geringeres Kollisionsrisiko mit dem autonom fahrenden Transportsystem zu als Objekten im ersten Nebenkorridor, die dieselbe Distanz, Geschwindigkeit und/oder Bewegungsrichtung haben. Als Folge davon erlaubt die Steuerungsvorrichtung, bei einem solchen detektierten Objekt im zweiten Nebenkorridor, eine höhere Geschwindigkeit, mit welcher sich das autonom fahrende Transportsystem entlang der Fahrtroute bewegt.

In einer vorteilhaften Ausführungsform ist die Steuerungsvorrichtung dazu ausgebildet, um den Fahrparameter, insbesondere die Geschwindigkeit, auch in Abhängigkeit eines Intensitätswerts der Hinderniserkennungseinrichtung und/oder eines Rauschens der Hinderniserkennungseinrichtung und/oder einer Reflektorerkennung der Hinderniserkennungseinrichtung und/oder einer Nebelerkennung durch die Hinderniserkennungseinrichtung anzupassen. Dadurch wird die Sicherheit weiter erhöht.

In einer vorteilhaften Ausführungsform ist die Steuerungsvorrichtung dazu ausgebildet, um zumindest den Fahrkorridor an die Hinderniserkennungseinrichtung zu übertragen. Vorzugsweise wird auch der erste Nebenkorridor an die Hinderniserkennungseinrichtung übertragen. Dadurch findet die Ermittlung, ob sich das detektierte Objekt im Fahrkorridor oder in dem zumindest einen ersten Nebenkorridor befindet, direkt in der Hinderniserkennungseinrichtung statt. Vorzugsweise informiert die Hinderniserkennungseinrichtung die Steuerungsvorrichtung über ein detektiertes Objekt erst dann, wenn dieses ein Risiko darstellt.

In einer vorteilhaften Ausführungsform umfasst die Hinderniserkennungseinrichtung zumindest einen ToF-Sensor, Lidar-Sensor, FMCW-Sensor, eine 3D-Kamera, einen Radar-Sensor und/oder einen Ultraschallsensor. Selbstverständlich können auch mehrere dieser Sensoren, auch unterschiedlicher Art, Teil der Hinderniserkennungseinrichtung sein.

In einer vorteilhaften Ausführungsform ist die Steuerungsvorrichtung dazu ausgebildet, um auf einer Anzeigeeinheit, insbesondere einer Bildschirmeinheit, den Fahrkorridor nebst der Fahrtroute, sowie den zumindest einen ersten Nebenkorridor grafisch darzustellen. Die Bildschirmeinheit kann lokal am autonom fahrenden Transportsystem angeordnet sein oder entfernt hierzu, insbesondere in einem übergeordneten Leit- und/oder Steuerungssystem.

In einer vorteilhaften Ausführungsform erstreckt sich der Überwachungsbereich über mehr als 160°, 170° oder über mehr als 180° um das autonom fahrende Transportsystem herum. Insbesondere ist er 180°. Alternativ kann er auch 360° sein.

In einer vorteilhaften Ausführungsform ist die Steuerungsvorrichtung dazu ausgebildet, um den Fahrparameter anders anzupassen oder nicht anzupassen, wenn es sich bei dem detektierten Objekt um ein anderes autonom fahrendes Transportsystem handelt.

Das erfindungsgemäße Verfahren zum Betrieb eines autonom fahrenden Transportsystems, welches insbesondere zum Transport von Waren dient und welches eine Steuerungsvorrichtung, eine Hinderniserkennungseinrichtung und eine Antriebseinheit umfasst, weist die nachfolgenden Verfahrensschritte auf. In einem ersten Verfahrensschritt bewegt sich das autonom fahrende Transportsystem entlang einer Fahrtroute mit einem bestimmten Fahrparameter. In einem zweiten Verfahrensschritt wird ein Objekt in einem Überwachungsbereich des autonom fahrenden Transportsystems detektiert und eine entsprechende Objektinformation, die vorzugsweise zumindest die Position des Objekts umfasst, an die Steuerungsvorrichtung übertragen. In einem dritten Verfahrensschritt wird der Überwachungsbereich in einen Fahrkorridor und in zumindest einen ersten Nebenkorridor unterteilt, wobei die Fahrtroute durch den Fahrkorridor verläuft. Selbstverständlich umfasst dies, dass der dritte Verfahrensschritt auch als zweiter oder erster Verfahrensschritt ausgeführt werden kann. In einem vierten Verfahrensschritt wird anhand der Objektinformation ermittelt, ob sich das detektierte Objekt im Fahrkorridor oder in dem zumindest einen ersten Nebenkorridor befindet. In einem fünften Verfahrensschritt wird der Fahrparameter unterschiedlich angepasst und zwar in Abhängigkeit davon ob sich das Objekt im ersten Nebenkorridor oder im Fahrkorridor befindet.

Nachfolgend werden noch einige grundsätzliche Überlegungen dargelegt, die das autonom fahrende Transportsystem (AGV) betreffen. Das AGV dient insbesondere zur Kollisionsvermeidung im Industrieumfeld basierend auf der Regelung der Fahrgeschwindigkeit, also des Fahrparameters, des AGV in Abhängigkeit von der erfassten sicheren Distanz und sicheren Geschwindigkeit von Objekten in der Umgebung mittels eines Sicherheitssensors, also der Hinderniserkennungseinrichtung.

Sicherheitstechnische Voraussetzungen für ein solches System sind ein Sicherheitssensor (z.B. nach Performance Level d) zur Umgebungserfassung (z.B. optischer Laserscanner/Lidar/3D Kamera oder Radar), ein Sicherheitssensor/Encoder zur Bestimmung der Fahrzeuggeschwindigkeit, eine sichere Steuerung, sowie eine sichere Messdatenschnittstelle mit sicherem Protokoll zwischen den Sicherheitssensoren und der sicheren Steuerung. Der Sicherheitssensor/Encoder ist Teil der Hinderniserkennungseinrichtung, wobei die sichere Steuerung Teil der Steuerungsvorrichtung ist. Eine sichere Messdatenausgabe für den Laserscanner/Lidar-Sensor kann z.B. in Form einer nachgewiesenen Messunsicherheit für jeden Distanzwert oder mittels Prüfsummen realisiert werden.

Ein weiterer Vorteil des AGV ist eine Routenplanung und gegebenenfalls Lokalisierung des AGV, was nicht zwingend mit einer sicheren Steuerung geregelt werden muss, sondern auch eine unsichere Steuerung übernehmen kann.

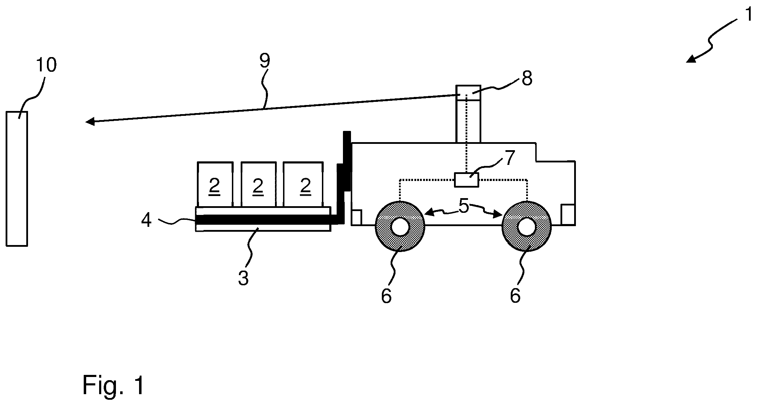

Gemäß einem Beispiel fährt das AGV mit einer konstanten Geschwindigkeit, wobei ein entsprechendes starres Schutzfeld abhängig von Fahrgeschwindigkeit, Ansprechzeit, Bremsweg, Fahrzeuggeometrie und Fahrrichtung vom Sicherheitssensor zur Umgebungserfassung permanent auf Eingriffe/Verletzungen überprüft wird. Bei einem detektierten Eingriff in das Schutzfeld, d.h. ein Objekt befindet sich im Schutzfeld, wird der sichere Ausgang (OSSD) geschaltet, sodass das AGV einen Not-Stopp einlegt (siehe Abbildung 1). Bei Sondersituationen wie z.B. enge Kurven oder Einfahrt in eine Ladestation wird das aktive Schutzfeld infolge einer gleichzeitig vorgegebenen AGV Bewegung (z.B. Fahrgeschwindigkeitsanpassung) umgeschaltet.

Auf derartige Schutzfelder soll hier verzichtet werden. Das AGV soll der (von der Navigationssteuerung) vorgegebenen Fahrtroute folgen. Das AGV-Sicherheitssystem, also die Steuerungsvorrichtung, sieht vor, dass die Fahrgeschwindigkeit des AGV von der Sicherheitssteuerung in Abhängigkeit der vom Sicherheitssensor erfassten sicheren Distanz und sicheren Geschwindigkeit der Objekte geregelt wird. Man kann also von einer geregelten sicheren Fahrgeschwindigkeit sprechen.

Insbesondere mittels einer festen Korrelation zwischen erfassten Distanzen und Geschwindigkeiten der Objekte soll die AGV-Fahrgeschwindigkeit von der Sicherheitssteuerung geregelt werden. Die Regelung der Fahrgeschwindigkeit basierend auf der genannten Korrelation kann demnach binär, Maximalgeschwindigkeit (dritter Bereich) oder Stopp (erster Bereich) und/oder kontinuierlich (zweiter Bereich) erfolgen.

Die Korrelation zwischen Distanz und Geschwindigkeit der Objekte zur Regelung der Fahrgeschwindigkeit kann auch nicht-linear, z.B. quadratisch, logarithmisch, oder ohne mathematischen Zusammenhang, sondern in beliebiger Form sein.

Die Distanz der Objekte ist vorwiegend die radiale Distanz und die Geschwindigkeit der Objekte ist vorwiegend die radiale Geschwindigkeit. Die radiale Distanz und Geschwindigkeit kann vorwiegend mit einem FMCW-Lidar bevorzugt innerhalb eines Scans oder mit einem ToF Lidar/3D Kamera bevorzugt innerhalb mindestens zwei Scans/Frames bestimmt werden.

Alternativ zur radialen Messung bezogen auf den Sensor kann die Distanz und Geschwindigkeit der Objekte bezogen auf einen oder mehrere Bezugspunkte bestimmt werden, z.B. eine Fahrzeugkante des AGV. In diesem Fall muss die AGV-Geometrie bzw. kollisionsverursachende Fahrzeugteile bevorzugt konfigurierbar sein, sodass die entsprechenden Bezugspunkte bei der Regelung der Fahrgeschwindigkeit von der Sicherheitssteuerung, also der Steuerungsvorrichtung berücksichtigt werden.

Die gemessene Distanz und Geschwindigkeit zur Regelung der Fahrgeschwindigkeit des AGV kann sich auf verschiedene Erfassungsgrößen beziehen:
1) Einzelne Konturpunkte: Im Falle von Lidar wäre dies jeder relevante Strahl bzw. Winkelsegment, wobei auch eine Pixel-Filterung von einzelnen Ausrei-Bern erfolgen kann.
2) Bündelung oder Clusterung von Konturpunkten zu größeren Konturen, z.B. 5 zusammenhängende Konturpunkte
3) Objekte bestehend aus vielen Konturpunkten: Dies würde eine Segmentierung und/oder Erkennung und/oder Klassifizierung der Konturpunkte in einzelne Objekte voraussetzen.

Vorzugsweise wird zur Regelung der Fahrgeschwindigkeit der worst-case Fall im Sinne der Sicherheit berücksichtigt, d.h. die minimale AGV-Fahrgeschwindigkeit resultierend aus der Korrelation zwischen gemessener Distanz und Geschwindigkeit der Objekte wird geregelt, insofern viele relevante Objekte erfasst werden.

Die Regelung der Fahrgeschwindigkeit anhand der erfassten Distanz und Geschwindigkeit der Objekte wird im allgemeinen Fall bevorzugt für den gesamten potentiellen Fahrbereich vor dem AGV realisiert.

Ergänzend oder alternativ kann die Regelung auch für Objekte ausschließlich innerhalb eines vorgegebenen Überwachungsbereichs wie z.B. des Fahrkorridors des AGV erfolgen ähnlich einem klassischen Schutzfeld. Allerdings würde dieser Überwachungsbereich keinen binären sicheren Ausgang regeln, wie das für ein klassisches Schutzfeld der Fall wäre, sondern nur die Berücksichtigung von Objekten für die Fahrgeschwindigkeitsregelung definieren. Alle anderen Objekte außerhalb des Überwachungsbereiches würden dann bezüglich der Regelung der Fahrgeschwindigkeit ignoriert werden.

Hierbei wären auch mehrere Überwachungsbereiche mit unterschiedlichem Gefährdungsrisiko für eine Kollision denkbar, z.B. ein Überwachungsbereich direkt für den Fahrkorridor des AGV mit großem Gefährdungsrisiko und ein zweiter Überwachungsbereich, also den ersten Nebenkorridor, für den seitlichen Bereich neben dem AGV mit kleinerem Gefährdungsrisiko. Für die unterschiedlichen Überwachungsbereiche können in diesem Fall verschiedene Korrelationen, z.B. unterschiedliche Steigungen, zwischen erfasster Distanz und Geschwindigkeit der Objekte zur Regelung der Fahrgeschwindigkeit definiert werden. So würde für den zweiten Überwachungsbereich, also für den ersten Nebenkorridor, für ein erfasstes Objekt mit identischer Distanz und Geschwindigkeit wie im ersten Überwachungsbereich, also für den Fahrkorridor, eine größere Fahrgeschwindigkeit geregelt werden, da das Gefährdungsrisiko kleiner ist. Die entscheidende geregelte Fahrgeschwindigkeit bei Objekten in mehreren Überwachungsbereichen wäre wie oben beschrieben bevorzugt die worst-case und demnach langsamste resultierende AGV-Fahrgeschwindigkeit.

Durch die Erfindung ergeben sich bevorzugt folgende Vorteile. Klassische starre Schutzfelder als Sicherheitsfunktion für AGV-Kollisionsvermeidung sind nicht mehr nötig. Statische Objekte, die in ein klassisches Schutzfeld ragen und damit eine OSSD-Schaltung, Not-Stopp oder Schutzfeld-Umschaltung verursachen würden, führen nur noch zu einer Geschwindigkeits-Reduktion oder Fahrtweg-Anpassung des AGVs und würden dadurch die Produktivität der AGVs deutlich erhöhen und Überwachungsaufwand deutlich reduzieren. Flexible Fahrtrouten von AGV-Flotten können abgesichert werden, da keine Diskretisierung in Form von fest eingelernten Schutzfeldern nötig ist. Im Vergleich zu sicheren Systemen umfassend mehrere parallel unsichere Lidar-Sensoren, die nur Messdaten liefern, sind nur ein Sicherheits-Lidar-Sensor und eine sichere Steuerung notwendig. Dadurch können Kosten und Aufwände für Sensorfusion gespart werden.

Weitere Vorteile sind außerdem die Korrelation zwischen erfasster Distanz und Geschwindigkeit der Objekte zur Regelung der Fahrgeschwindigkeit, die auch nicht-linear, z.B. quadratisch, logarithmisch, oder ohne mathematischen Zusammenhang, sondern in beliebiger Form sein kann. Neben den von der, insbesondere sicheren, Hinderniserkennungseinrichtung erfassten Größen Distanz und Geschwindigkeit der Objekte können auch andere Größen für die Regelung der Fahrgeschwindigkeit berücksichtigt werden, z.B. Intensität, Rauschen/Noise, Reflektorerkennung, Nebelerkennung. Insgesamt können auch 3D-Lidar Sensoren mit 3D-Daten verwendet werden. Auch andere Sichtbereiche, z.B. 360° anstatt 180° sind denkbar. Auch andere sichere Sensoren zur Umgebungserfassung sind einsetzbar, wie: ToF (Time of Flight) Lidar, FMCW (Frequency Modulated Continous Wave)/Coherent Lidar, 3D Camera (Flash Lidar), Radar, Ultraschall. Der aktuelle Fahrkorridor kann auch von der sicheren AGV-Steuerung, also der Steuerungsvorrichtung, an den Lidar-Sensor, also an die Hinderniserkennungseinrichtung, weitergegeben werden (bidirektionale Datenübertragung) zur Berücksichtigung der aktuellen Überwachungsbereiche. Die von der Hinderniserkennungseinrichtung, insbesondere in Form eines Laserscanners zur Umgebungserfassung ausgegebenen sicheren Messdaten, können für weitere Ansätze der Routenplanung der AGV-Steuerung verwendet werden, z.B. Ray Marching Ansatz.

Nachfolgend wird die Erfindung rein beispielhaft unter Bezugnahme auf die Zeichnungen beschrieben. Es zeigen:
- Figur 1:: ein Ausführungsbeispiel des erfindungsgemäßen autonom fahrenden Transportsystems;
- Figur 2:: einen Überwachungsbereich des erfindungsgemäßen autonom fahrenden Transportsystems, welcher in einen Fahrkorridor und in zumindest einen ersten Nebenkorridor unterteilt ist;
- Figur 3:: eine Möglichkeit, wie ein Fahrparameter des autonom fahrenden Transportsystems bei Detektion von verschiedenen Objekten im zumindest einen ersten Nebenkorridor unterschiedlich angepasst wird;
- Figur 4:: einen Überwachungsbereich des erfindungsgemäßen autonom fahrenden Transportsystems, welcher in einen Fahrkorridor, zumindest einen ersten Nebenkorridor und in einen zweiten Nebenkorridor unterteilt ist; und
- Figur 5:: ein Flussdiagramm, welches ein Verfahren zum Betrieb des autonom fahrenden Transportsystems beschreibt.

Figur 1 zeigt ein Ausführungsbeispiel eines erfindungsgemäßen autonom fahrenden Transportsystems 1, welches in diesem Fall in Form eines Staplers ausgebildet ist. Das autonom fahrende Transportsystem 1 dient zum Transport von Waren 2, die z.B. auf Paletten 3 und/oder Gitterboxen angeordnet sind. Um die Paletten 3 und/oder Gitterboxen aufzunehmen umfasst der Stapler 1 vorzugsweise zwei Gabeln 4.

Das autonom fahrende Transportsystem 1 umfasst eine Antriebseinheit 5. Vorzugsweise handelt es sich um eine elektrische Antriebseinheit 5, die beispielsweise induktiv (z.B. über zumindest eine Leiterbahn im Boden) oder über einen Akku mit elektrischer Energie versorgt wird. Die Antriebseinheit 5 ist dazu ausgebildet, um alle Räder 6 oder nur die Vorderräder oder nur die Hinterräder des autonom fahrenden Transportsystems 1 anzutreiben.

Das autonom fahrende Transportsystem 1 umfasst außerdem eine Steuervorrichtung 7 und eine Hinderniserkennungseinrichtung 8. Die Hinderniserkennungseinrichtung 8 ist dazu ausgebildet, um in einem Überwachungsbereich 9 des autonom fahrenden Transportsystems 1 ein Objekt 10 zu detektieren und eine entsprechende Objektinformationen an die Steuerungsvorrichtung 7 zu übertragen.

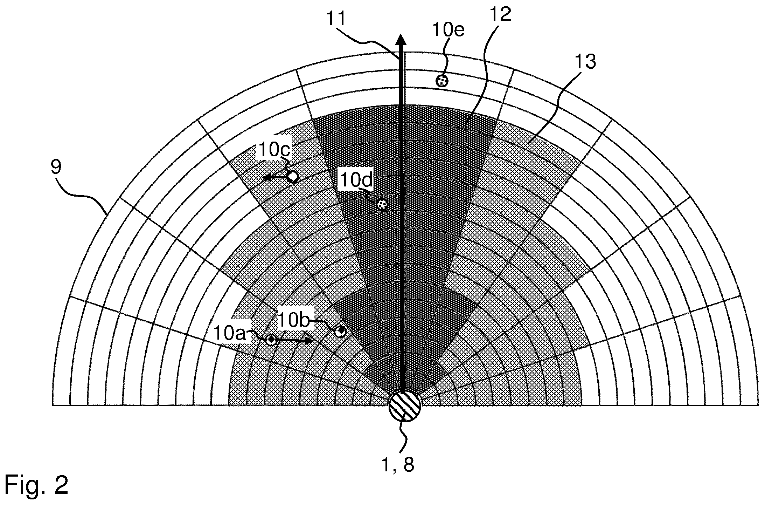

Figur 2 zeigt den Überwachungsbereich 9 des erfindungsgemäßen autonom fahrenden Transportsystems 1. In diesem Ausführungsbeispiel erstreckt sich der Überwachungsbereich 9 um 180° um das autonom fahrende Transportsystem 1 herum und zeigt mit seinem Zentrum in Fahrtrichtung des autonom fahrenden Transportsystems 1.

Die Antriebseinheit 5 ist dazu ausgebildet, um das autonom fahrende Transportsystem 1 entlang einer Fahrtroute 11 mit einem bestimmten Fahrparameter zu bewegen.

Die Steuerungsvorrichtung 7 ist dazu ausgebildet, um den Überwachungsbereich 9 in einen Fahrkorridor 12 und in zumindest einen ersten Nebenkorridor 13 zu unterteilen. Die Fahrtroute 11 verläuft durch den Fahrkorridor 12.

Der erste Nebenkorridor 13 schließt sich unmittelbar an den Fahrkorridor 12 zu dessen linker und rechter Seite hin an.

Der Fahrkorridor 12 und der zumindest eine erste Nebenkorridor 13 erstrecken sich in diesem Ausführungsbeispiel nicht über die gesamte Länge des Überwachungsbereichs 9, der durch die Reichweite der Hinderniserkennungseinrichtung 8 gebildet ist. Es wäre allerdings auch möglich, dass sich der Fahrkorridor 12 und/oder der zumindest eine erste Nebenkorridor 13 über die gesamte Länge des Überwachungsbereichs 9 erstrecken.

In diesem Ausführungsbeispiel ist der Überwachungsbereich 9 auch nicht vollständig in den Fahrkorridor 12 und den zumindest einen ersten Nebenkorridor 13 unterteilt. So gibt es Bereiche des Überwachungsbereichs 9, die weder zu dem Fahrkorridor 12, noch zu dem ersten Nebenkorridor 13 gehören. Grundsätzlich wäre es allerdings denkbar, dass der Überwachungsbereich 9 vollständig entweder in den Fahrkorridor 12 oder in den zumindest einen ersten Nebenkorridor 13 unterteilt ist.

In Figur 2 sind beispielhaft fünf Objekte 10a, 10b, 10c, 10d, 10e dargestellt, die in unterschiedlicher Position im Überwachungsbereich 9 durch die Hinderniserkennungseinrichtung 8 detektiert wurden.

Die Steuerungsvorrichtung 7 ist dazu ausgebildet ist, um anhand der Objektinformation zu ermitteln, ob sich das detektierte Objekt 10a, 10b, 10c, 10d, 10e im Fahrkorridor 12 oder in dem zumindest einen ersten Nebenkorridor 13 befindet. Bei der Objektinformation handelt es sich beispielsweise um die Position und/oder die Geschwindigkeit und/oder die Bewegungsrichtung des Objekts 10a, 10b, 10c, 10d, 10e.

Ein erstes Objekt 10a ist im ersten Nebenkorridor 13 angeordnet und bewegt sich mit einer bestimmten Geschwindigkeit, die durch die Länge des Pfeils dargestellt ist, in Richtung der Fahrtroute 11, wobei die Richtung des ersten Objekts 10a durch die Richtung des Pfeils dargestellt wird.

Ein zweites Objekt 10b ist im ersten Nebenkorridor 13 stationär angeordnet. Es bewegt sich nicht.

Ein drittes Objekt 10c ist im ersten Nebenkorridor 13 angeordnet und bewegt sich mit einer bestimmten Geschwindigkeit, die durch die Länge des Pfeils dargestellt ist, weg von der Fahrtroute 11, wobei die Richtung des dritten Objekts 10c durch die Richtung des Pfeils dargestellt wird. Das dritte Objekt 10c bewegt sich in diesem Fall langsamer als das erste Objekt 10a, was durch die Länge des Pfeils symbolisiert wird.

Ein viertes Objekt 10d befindet sich im Fahrkorridor 12. Es ist stationär angeordnet.

Ein fünftes Objekt 10e befindet sich außerhalb des Fahrkorridors 12 und außerhalb des ersten Nebenkorridors 13. Allerdings wird sich das fünfte Objekt 10e bei fortschreitender Bewegung des autonom fahrenden Transportsystems 1 irgendwann im Fahrkorridor 12 befinden.

Die Steuerungsvorrichtung 7 ist dazu ausgebildet, um einen Fahrparameter, wie beispielsweise die Geschwindigkeit und/oder einen Lenkeinschlag, anders anzupassen, wenn sich das Objekt 10a, 10b, 10c, 10d, 10e im ersten Nebenkorridor 13 befindet als wenn sich das Objekt 10a, 10b, 10c, 10d, 10e im Fahrkorridor 12 befindet.

Bei Detektion des ersten Objekts 10a im zumindest einen ersten Nebenkorridor 13 findet ein Anhalten des autonom fahrenden Transportsystems 1 statt, weil sich das erste Objekt 10a mit einer hohen Geschwindigkeit in Richtung des autonom fahrenden Transportsystem 1 bewegt und ein Kollisionsrisiko besteht.

Bei Detektion des zweiten Objekts 10b im zumindest einen ersten Nebenkorridor 13 findet eine Reduktion der Geschwindigkeit des autonom fahrenden Transportsystem 1 statt. Das autonom fahrende Transportsystem 1 wird allerdings nicht angehalten.

Bei Detektion des dritten Objekts 10c im zumindest einen ersten Nebenkorridor 13 findet keine Reduktion der Geschwindigkeit des autonom fahrenden Transportsystems 1 statt, weil sich das dritte Objekt 10c weit genug von dem Fahrkorridor 12 entfernt befindet und sich außerdem weg vom Fahrkorridor 12 bewegt.

Bei Detektion des vierten Objekts 10d im Fahrkorridor 12 findet ein Anhalten des autonom fahrenden Transportsystems 1 statt, weil in naher Zukunft ein Kollisionsrisiko droht.

Bei Detektion des fünften Objekts 10e im Überwachungsbereich 9, welches in Zukunft im Fahrkorridor 12 liegen kann, findet ein erneutes Festlegen der Fahrtroute 11 und damit des Fahrkorridors 12 statt und zwar derart, dass sich das fünfte Objekt 10e nicht im neuen Fahrkorridor befinden wird. Das autonom fahrende Transportsystem 1 wird das fünfte Objekt 10e mittels einer Kurve umfahren. Ein derartiges Ausweichen ist auch möglich, wenn sich ein Objekt 10 zwar im Fahrkorridor 12 befindet, allerdings der Abstand zum autonom fahrenden Transportsystem 1 ausreichend groß, also größer als ein Schwellwert, ist, um sicher ein Ausweismanöver durchführen zu können.

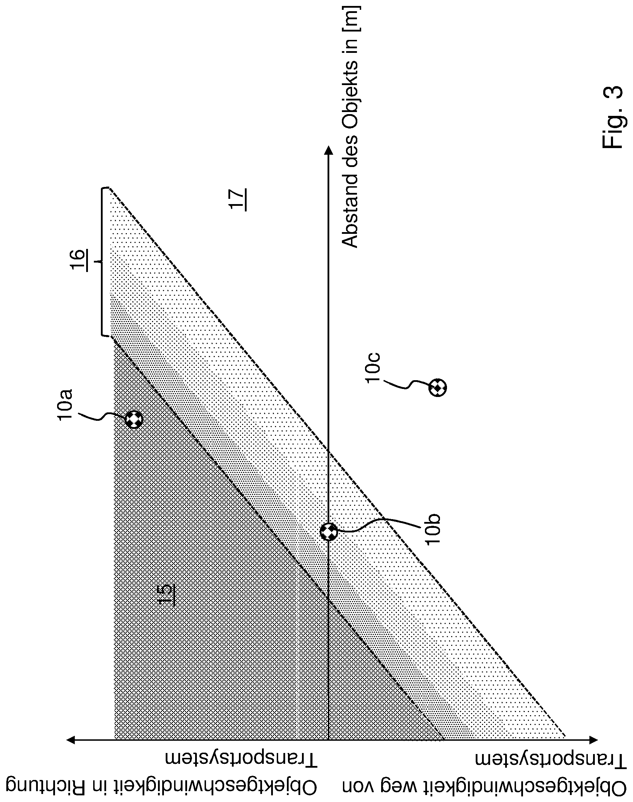

Figur 3 beschreibt eine Möglichkeit, wie ein Fahrparameter des autonom fahrenden Transportsystems 1 bei Detektion von verschiedenen Objekten 10a, 10b, 10c im zumindest einen ersten Nebenkorridor 13 unterschiedlich, insbesondere adaptiv, angepasst wird.

Die Steuerungsvorrichtung 7 ist dazu ausgebildet, um anhand der Objektinformation des im ersten Nebenkorridor 13 detektierten Objekts 10a, 10b, 10c den Fahrparameter derart einzustellen, dass das autonom fahrende Transportsystem 1 anhält, bzw. seine Geschwindigkeit, bezogen auf eine maximale zulässige Geschwindigkeit für die aktuelle Position auf der Fahrroute 11, reduziert, bzw. mit der maximal zulässigen Geschwindigkeit für die aktuelle Position auf der Fahrroute 11 fährt.

Auf der X-Achse ist der gemessene Objektabstand in Meter (m) vom autonom fahrenden Transportsystem 1 bzw. der Hinderniserkennungseinrichtung 8 dargestellt. Die Schraffur stellt einen einzustellenden Fahrparameter für das autonom fahrende Transportsystem 1, in Form der Geschwindigkeit in m/s für das autonom fahrende Transportsystem 1, dar. Bereiche mit derselben Schraffur bewirken die Auswahl desselben Fahrparameters. Selbstverständlich können die Bereiche feiner oder gröber abgestuft sein, es kann also mehr oder weniger Schraffuren geben. Im Bereich oberhalb der X-Achse werden detektierte Objekte 10a eingezeichnet, die sich in Richtung des autonom fahrenden Transportsystems 1 bewegen. Im Bereich unterhalb der X-Achse werden detektierte Objekte 10c eingezeichnet, die sich weg von dem autonom fahrenden Transportsystem 1 bewegen. Auf der X-Achse werden stationär angeordnete Objekte 10b eingezeichnet.

In diesem Fall ist der erste Nebenkorridor 13 in drei unterschiedliche Bereiche 15, 16, 17 gegliedert. In einem ersten Bereich 15, der auch als Haltebereich bezeichnet werden kann, findet in Abhängigkeit der Objektinformation, also insbesondere Objektgeschwindigkeit und Objektabstand, ein Anhalten des autonom fahrenden Transportsystems 1 statt. Das erste Objekt 10a aus Figur 2 bewegt sich mit einer hohen Geschwindigkeit in Richtung des autonom fahrenden Transportsystems 1. Aus diesem Grund ist es auch oberhalb der X-Achse eingezeichnet. Daher besteht ein hohes Kollisionsrisiko und die Steuerungsvorrichtung 7 legt den Fahrparameter derart fest, dass ein Anhalten erfolgt. Bewegt sich das Objekt 10 mit kleinem Abstand zum autonom fahrenden Transportsystem 1, weg von dem autonom fahrenden Transportsystem 1, so muss die Geschwindigkeit des Objekts 10 eine Grenze der Objektgeschwindigkeit weg vom Transportsystem 1 passieren (in Fig. 3 nach unten), damit kein Anhalten des autonom fahrenden Transportsystems 1 ausgelöst wird.

In einem zweiten Bereich 16, der auch als adaptiver Fahrbereich bezeichnet werden kann, findet eine konstante Änderung des Fahrparameters, insbesondere der Geschwindigkeit, mit welcher das autonom fahrende Transportsystem 1 fährt, in Abhängigkeit der fortlaufend detektierten Objektinformation statt. In dem zweiten Bereich 16 ist die Geschwindigkeit, mit welcher sich das autonom fahrende Transportsystem 1 bewegt, größer Null aber kleiner als eine für die aktuelle Position auf der Fahrtroute 11 zulässige Geschwindigkeit und/oder kleiner als die Höchstgeschwindigkeit des autonom fahrenden Transportsystems 1. Das zweite Objekt 10b aus Figur 2, welches stationär angeordnet ist, ist in diesem zweiten Bereich 16 eingezeichnet. In Abhängigkeit der Objektinformation, also in Abhängigkeit der Position und/oder Geschwindigkeit des zweiten Objekts 10b, findet eine Reduzierung der Fahrgeschwindigkeit des autonom fahrenden Transportsystems 1 statt.

In einem dritten Bereich 17, der auch als normaler Fahrbereich bezeichnet werden kann, bewegt sich das autonom fahrende Transportsystem 1 mit der maximal zulässigen Geschwindigkeit für die aktuelle Position auf der Fahrtroute 11. Das dritte Objekt 10c aus Figur 2, welches sich mit einer Geschwindigkeit weg von dem autonom fahrenden Transportsystem 1 bewegt, ist in diesem dritten Bereich 17 unterhalb der X-Achse eingezeichnet.

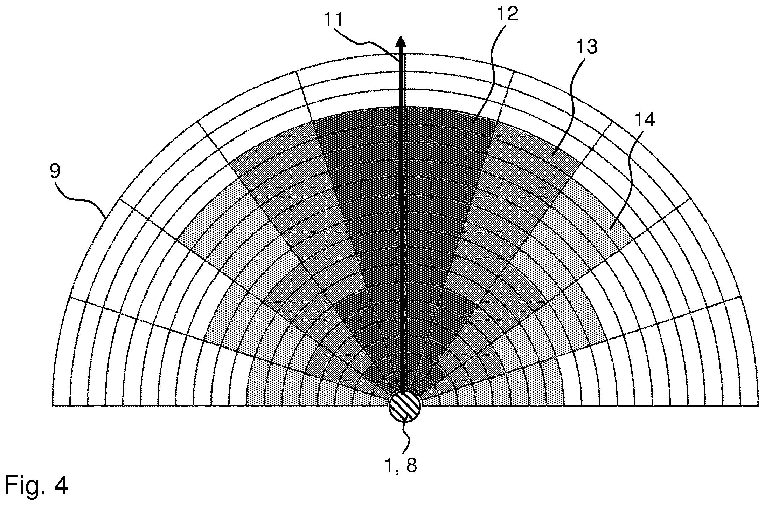

Figur 4 zeigt einen Überwachungsbereich 9 des erfindungsgemäßen autonom fahrenden Transportsystems 1, welcher in einen Fahrkorridor 12, zumindest einen ersten Nebenkorridor 13 und in einen zweiten Nebenkorridor 14 unterteilt ist. Der erste Nebenkorridor 13 ist zwischen dem Fahrkorridor 12 und dem zweiten Nebenkorridor 14 angeordnet. Die Steuerungsvorrichtung 7 ist dazu ausgebildet, um bei einer Detektion eines Objekts 10 im zweiten Nebenkorridor 14, welches dieselbe Distanz zum autonom fahrenden Transportsystem 1 umfasst und/oder dieselbe Geschwindigkeit und/oder dieselbe Bewegungsrichtung wie ein Objekt 10, welches im ersten Nebenkorridor 13 detektiert wird, einen Fahrparameter derart anzupassen, dass die Geschwindigkeit, mit welcher sich das autonom fahrende Transportsystem 1 bewegt, höher ist, wenn ein solches Objekt 10 im zweiten Nebenkorridor 14 detektiert wird als im ersten Nebenkorridor 13.

Für den zweiten Nebenkorridor 14 können dieselben Ausführungen wie für den ersten Nebenkorridor 13 gelten. So kann auch der zweite Nebenkorridor 14 über einen ersten Bereich, der auch als Haltebereich bezeichnet werden kann, einen zweiten Bereich, der auch als adaptiver Fahrbereich bezeichnet werden kann, und einen dritten Bereich, der auch als normaler Fahrbereich bezeichnet werden kann, verfügen.

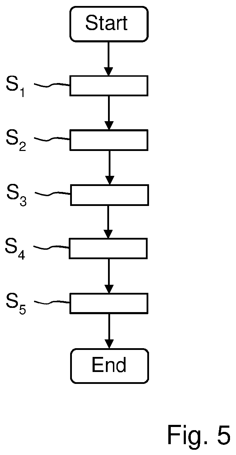

Figur 5 zeigt ein Flussdiagramm, welches ein erfindungsgemäßes Verfahren zum Betrieb des autonom fahrenden Transportsystems 1 beschreibt. In einem ersten Verfahrensschritt S₁ bewegt sich das autonom fahrende Transportsystem 1 entlang einer Fahrtroute 11 mit einem bestimmten Fahrparameter. In einem zweiten Verfahrensschritt S₂ wird ein Objekt 10 in einem Überwachungsbereich 9 des autonom fahrenden Transportsystems 1 detektiert und eine entsprechende Objektinformation, die vorzugsweise zumindest die Position des Objekts 10 umfasst, an die Steuerungsvorrichtung 7 übertragen. In einem dritten Verfahrensschritt S₃ wird der Überwachungsbereich 9 in einen Fahrkorridor 12 und in zumindest einen ersten Nebenkorridor 13 unterteilt, wobei die Fahrtroute 11 durch den Fahrkorridor 12 verläuft. Eine Reihenfolge bzgl. des dritten Verfahrensschritts S₃ ist nicht vorgegeben. Der dritte Verfahrensschritt S₃ kann auch als zweiter oder erster Verfahrensschritt S₁, S₂ ausgeführt werden. In einem vierten Verfahrensschritt S₄ wird anhand der Objektinformation ermittelt, ob sich das detektierte Objekt 10 im Fahrkorridor 12 oder in dem zumindest einen ersten Nebenkorridor 13 befindet. In einem fünften Verfahrensschritt S₅ wird der Fahrparameter unterschiedlich angepasst und zwar in Abhängigkeit davon ob sich das Objekt 10 im ersten Nebenkorridor 13 oder im Fahrkorridor 12 befindet.

**Bezugszeichenliste**

| | |
|---|---|
| Autonom fahrendes Transportsystem | 1 |
| Waren | 2 |
| Palette | 3 |
| Gabeln | 4 |
| Antriebseinheit | 5 |
| Räder | 6 |
| Steuerungsvorrichtung | 7 |
| Hinderniserkennungseinrichtung | 8 |
| Überwachungsbereich | 9 |
| Objekt | 10, 10a, 10b, 10c, 10d, 10e |
| Fahrtroute | 11 |
| Fahrkorridor | 12 |
| Erster Nebenkorridor | 13 |
| Zweiter Nebenkorridor | 14 |
| Bereiche für Fahrgeschwindigkeit des Transportsystems des Nebenkorridors | 15, 16, 17 |
| Verfahrensschritte | S₁, S₂, S₃, S₄, S₅ |

## Patentansprüche

1. Autonom fahrendes Transportsystem (1), insbesondere zum Transport von Waren (2), mit einer Steuerungsvorrichtung (7), einer Hinderniserkennungseinrichtung (8) und einer Antriebseinheit (5), wobei die Antriebseinheit (5) dazu ausgebildet ist, um das autonom fahrende Transportsystem (1) entlang einer Fahrtroute (11) mit einem bestimmten Fahrparameter zu bewegen,
wobei die Hinderniserkennungseinrichtung (8) dazu ausgebildet ist, um in einem Überwachungsbereich (9) des autonom fahrenden Transportsystems (1) ein Objekt (10, 10a, 10b, 10c, 10d, 10e) zu detektieren und eine entsprechende Objektinformation an die Steuerungsvorrichtung (7) zu übertragen,
wobei die Steuerungsvorrichtung (7) dazu ausgebildet ist, den Überwachungsbereich (9) in einen Fahrkorridor (12) und in zumindest einen ersten Nebenkorridor (13) zu unterteilen, wobei die Fahrtroute (11) durch den Fahrkorridor (12) verläuft,
wobei die Steuerungsvorrichtung (7) weiter dazu ausgebildet ist, um anhand der Objektinformation zu ermitteln, ob sich das detektierte Objekt (10, 10a, 10b, 10c, 10d, 10e) im Fahrkorridor (12) oder in dem zumindest einen ersten Nebenkorridor (13) befindet und wobei die Steuerungsvorrichtung (7) dazu ausgebildet ist, um einen Fahrparameter anders anzupassen, wenn sich das Objekt (10, 10a, 10b, 10c, 10d, 10e) im ersten Nebenkorridor (13) befindet als wenn sich das Objekt (10, 10a, 10b, 10c, 10d, 10e) im Fahrkorridor (12) befindet,
**dadurch gekennzeichnet, dass**
die Steuerungsvorrichtung (7) bei Detektion eines Objekts (10, 10a, 10b, 10c, 10d, 10e) im ersten Nebenkorridor (13) dazu ausgebildet ist, um den Fahrparameter derart einzustellen, dass die Fahrgeschwindigkeit des autonom fahrenden Transportsystems (1):
a) mit zunehmender Entfernung des Objekts (10, 10a, 10b, 10c, 10d, 10e) von dem autonom fahrenden Transportsystem (1) höher ist; und/oder
b) mit zunehmender Geschwindigkeit des Objekts (10, 10a, 10b, 10c, 10d, 10e) in Richtung der Fahrtroute (11) des autonom fahrenden Transportsystems (1) niedriger ist; und/oder
c) mit zunehmender Geschwindigkeit des Objekts (10, 10a, 10b, 10c, 10d, 10e) weg von der Fahrtroute (11) des autonom fahrenden Transportsystems (1) höher ist.

2. Autonom fahrendes Transportsystem (1) nach Anspruch 1,
wobei die Steuerungsvorrichtung (7) dazu ausgebildet ist, um bei einem detektierten Objekt (10, 10a, 10b, 10c, 10d, 10e) im Fahrkorridor (12) den Fahrparameter derart einzustellen, dass das Transportsystem (1):
a) anhält;
b) seine Geschwindigkeit, bezogen auf eine maximale zulässige Geschwindigkeit für die aktuelle Position auf der Fahrroute (11), reduziert; und/oder
c) mit der maximal zulässigen Geschwindigkeit für die aktuelle Position auf der Fahrroute (11) fährt.

3. Autonom fahrendes Transportsystem (1) nach Anspruch 1 oder 2, wobei die Steuerungsvorrichtung (7) dazu ausgebildet ist, um anhand der Objektinformation eine Distanz des im Fahrkorridor (12) detektierten Objekts (10, 10a, 10b, 10c, 10d, 10e) zum autonom fahrenden Transportsystem (1) zu ermitteln, um für den Fall, dass die Distanz einen ersten Abstandswert unterschreitet den Fahrparameter derart einzustellen, dass das Transportsystem (1) anhält und für den Fall, dass die Distanz einen zweiten Abstandswert, der größer als der erste Abstandswert ist, unterschreitet, die Fahrtroute (11) und damit den Fahrkorridor (12) derart neu festzulegen, dass sich das detektierte Objekt (10, 10a, 10b, 10c, 10d, 10e) nicht mehr im neuen Fahrkorridor (12) befindet.

4. Autonom fahrendes Transportsystem (1) nach einem der vorstehenden Ansprüche,
wobei sich der erste Nebenkorridor (13) unmittelbar an den Fahrkorridor (12) zu dessen Seite hin anschließt.

5. Autonom fahrendes Transportsystem (1) nach Anspruch 4,
wobei sich der erste Nebenkorridor (13) unmittelbar an der linken Seite des Fahrkorridors (12) an diesen anschließt und wobei sich der erste Nebenkorridor (13) unmittelbar an der rechten Seite des Fahrkorridors (12) an diesen anschließt.

6. Autonom fahrendes Transportsystem (1) nach einem der vorstehenden Ansprüche,
wobei es sich bei der Objektinformation um:
a) eine Position des Objekts (10, 10a, 10b, 10c, 10d, 10e) im Überwachungsbereich (9); und/oder
b) eine Geschwindigkeit des Objekts (10, 10a, 10b, 10c, 10d, 10e); und/oder
c) eine Bewegungsrichtung des Objekts (10, 10a, 10b, 10c, 10d, 10e);
handelt.

7. Autonom fahrendes Transportsystem (1) nach einem der vorstehenden Ansprüche,
wobei die Steuerungsvorrichtung (7) dazu ausgebildet ist, um anhand der Objektinformation eines im ersten Nebenkorridor (13) detektierten Objekts (10, 10a, 10b, 10c, 10d, 10e) den Fahrparameter derart einzustellen, dass das autonom fahrende Transportsystem (1):
a) anhält;
b) seine Geschwindigkeit, bezogen auf eine maximale zulässige Geschwindigkeit für die aktuelle Position auf der Fahrroute (11), reduziert;
c) mit der maximal zulässigen Geschwindigkeit für die aktuelle Position auf der Fahrroute (11) fährt.

8. Autonom fahrendes Transportsystem (1) nach einem der vorstehenden Ansprüche,
wobei die Steuerungsvorrichtung (7) bei Detektion eines Objekts (10, 10a, 10b, 10c, 10d, 10e) im ersten Nebenkorridor (13) dazu ausgebildet ist, um den Fahrparameter derart einzustellen, dass die Fahrgeschwindigkeit des autonom fahrenden Transportsystems (1) in Abhängigkeit:
a) der Distanz des detektierten Objekts (10, 10a, 10b, 10c, 10d, 10e) von dem autonom fahrenden Transportsystem (1); und/oder
b) der Geschwindigkeit des detektierten Objekts (10, 10a, 10b, 10c, 10d, 10e); und/oder
c) der Bewegungsrichtung des detektierten Objekts (10, 10a, 10b, 10c, 10d, 10e);
einstellbar ist.

9. Autonom fahrendes Transportsystem (1) nach Anspruch 8,
wobei die Fahrgeschwindigkeit des autonom fahrenden Transportsystems (1) und:
a) die Distanz des detektierten Objekts (10, 10a, 10b, 10c, 10d, 10e); und/oder
b) die Geschwindigkeit des detektierten Objekts (10, 10a, 10b, 10c, 10d, 10e); und/oder
c) die Bewegungsrichtung des detektierten Objekts (10, 10a, 10b, 10c, 10d, 10e);
über eine lineare oder nicht-lineare, insbesondre quadratische oder logarithmische, Funktion miteinander verknüpft ist.

10. Autonom fahrendes Transportsystem (1) nach einem der vorstehenden Ansprüche,
wobei die Steuerungsvorrichtung (7) bei Detektion eines Objekts (10, 10a, 10b, 10c, 10d, 10e) im ersten Nebenkorridor (13) dazu ausgebildet ist um für den Fall, dass:
a) eine Distanz zwischen dem Objekt (10, 10a, 10b, 10c, 10d, 10e) und dem autonom fahrenden Transportsystem (1) kleiner als ein erster Distanzwert ist, den Fahrparameter derart einzustellen, dass das autonom fahrende Transportsystem (1) anhält;
b) eine Distanz zwischen dem Objekt (10, 10a, 10b, 10c, 10d, 10e) und dem autonom fahrenden Transportsystem (1) größer als der erster Distanzwert und kleiner als ein zweiter Distanzwert ist, den Fahrparameter für die Geschwindigkeit des autonom fahrenden Transportsystems (1) in Abhängigkeit der Distanz einzustellen, wobei der Geschwindigkeitswert mit zunehmender Distanz größer gewählt wird;
c) eine Distanz zwischen dem Objekt (10, 10a, 10b, 10c, 10d, 10e) und dem autonom fahrenden Transportsystem (1) größer als der zweite Distanzwert ist, den Fahrparameter für die Geschwindigkeit des autonom fahrenden Transportsystems (1) auf einen maximal zulässigen Geschwindigkeitswert für die aktuelle Position auf der Fahrroute (11) einzustellen.

11. Autonom fahrendes Transportsystem (1) nach einem der vorstehenden Ansprüche,
wobei die Steuerungsvorrichtung (7) dazu ausgebildet ist, den Überwachungsbereich (9) noch mindestens in einen zweiten Nebenkorridor (14) zu unterteilen, wobei der erste Nebenkorridor (13) zwischen dem Fahrkorridor (12) und dem zweiten Nebenkorridor (14) angeordnet ist und wobei die Steuerungsvorrichtung (7) dazu ausgebildet ist, um bei einer Detektion eines Objekts (10, 10a, 10b, 10c, 10d, 10e) im zweiten Nebenkorridor (14), welches dieselbe Distanz zum autonom fahrenden Transportsystem (1) umfasst und/oder dieselbe Geschwindigkeit und/oder dieselbe Bewegungsrichtung wie ein Objekt (10, 10a, 10b, 10c, 10d, 10e), welches im ersten Nebenkorridor (13) detektiert wird, einen Fahrparameter derart anzupassen, dass die Geschwindigkeit, mit welcher sich das autonom fahrende Transportsystem (1) bewegt, höher ist, wenn ein solches Objekt (10, 10a, 10b, 10c, 10d, 10e) im zweiten Nebenkorridor (14) detektiert wird als im ersten Nebenkorridor (13).

12. Autonom fahrendes Transportsystem (1) nach einem der vorstehenden Ansprüche,
wobei die Steuerungsvorrichtung (7) dazu ausgebildet ist, um den Fahrparameter, insbesondere die Geschwindigkeit, auch in Abhängigkeit eines Intensitätswerts der Hinderniserkennungseinrichtung (8) und/oder eines Rauschens der Hinderniserkennungseinrichtung (8) und/oder einer Reflektorerkennung der Hinderniserkennungseinrichtung (8) und/oder einer Nebelerkennung durch die Hinderniserkennungseinrichtung (8) anzupassen.

13. Autonom fahrendes Transportsystem (1) nach einem der vorstehenden Ansprüche,
wobei die Steuerungsvorrichtung (7) dazu ausgebildet ist, um zumindest den Fahrkorridor (12) an die Hinderniserkennungseinrichtung (8) zu übertragen.

14. Verfahren zum Betrieb eines autonom fahrenden Transportsystems (1), insbesondere zum Transport von Waren (2), mit einer Steuerungsvorrichtung (7), einer Hinderniserkennungseinrichtung (8) und einer Antriebseinheit (5), mit den folgenden Verfahrensschritten:
- Bewegen (S₁) des autonom fahrenden Transportsystems (1) entlang einer Fahrtroute (11) mit einem bestimmten Fahrparameter;
- Detektieren (S₂) eines Objekts (10, 10a, 10b, 10c, 10d, 10e) in einem Überwachungsbereich (9) des autonom fahrenden Transportsystems (1) und übertragen einer Objektinformation an die Steuerungsvorrichtung (7);
- Unterteilen (S₃) des Überwachungsbereichs (9) in einen Fahrkorridor (12) und in zumindest einen ersten Nebenkorridor (13), wobei die Fahrtroute (11) durch den Fahrkorridor (12) verläuft;
- Ermitteln (S₄) anhand der Objektinformation, ob sich das detektierte Objekt (10, 10a, 10b, 10c, 10d, 10e) im Fahrkorridor (12) oder in dem zumindest einen ersten Nebenkorridor (13) befindet;
- Unterschiedliches Anpassen (S₅) des Fahrparameters, je nachdem ob sich das Objekt (10, 10a, 10b, 10c, 10d, 10e) im ersten Nebenkorridor (13) befindet oder im Fahrkorridor (12),
**dadurch gekennzeichnet, dass**
die Steuerungsvorrichtung (7) bei Detektion eines Objekts (10, 10a, 10b, 10c, 10d, 10e) im ersten Nebenkorridor (13) den Fahrparameter derart einstellt, dass die Fahrgeschwindigkeit des autonom fahrenden Transportsystems (1):
a) mit zunehmender Entfernung des Objekts (10, 10a, 10b, 10c, 10d, 10e) von dem autonom fahrenden Transportsystem (1) höher ist; und/oder
b) mit zunehmender Geschwindigkeit des Objekts (10, 10a, 10b, 10c, 10d, 10e) in Richtung der Fahrtroute (11) des autonom fahrenden Transportsystems (1) niedriger ist; und/oder
c) mit zunehmender Geschwindigkeit des Objekts (10, 10a, 10b, 10c, 10d, 10e) weg von der Fahrtroute (11) des autonom fahrenden Transportsystems (1) höher ist.

## Claims

1. An autonomously moving transport system (1), in particular for transporting goods (2), comprising a control apparatus (7), an obstacle recognition device (8) and a drive unit (5), wherein the drive unit (5) is configured to move the autonomously moving transport system (1) along a travel route (11) with a specific travel parameter,
wherein the obstacle recognition device (8) is configured to detect an object (10, 10a, 10b, 10c, 10d, 10e) in a monitored zone (9) of the autonomously moving transport system (1) and to transmit corresponding object information to the control apparatus (7),
wherein the control apparatus (7) is configured to divide the monitored zone (9) into a travel corridor (12) and at least one first secondary corridor (13), wherein the travel route (11) runs through the travel corridor (12),
wherein the control apparatus (7) is further configured to determine, based on the object information, whether the detected object (10, 10a, 10b, 10c, 10d, 10e) is located in the travel corridor (12) or in the at least one first secondary corridor (13), and wherein the control apparatus (7) is configured to adapt a travel parameter differently when the object (10, 10a, 10b, 10c, 10d, 10e) is located in the first secondary corridor (13) than when the object (10, 10a, 10b, 10c, 10d, 10e) is located in the travel corridor (12),
**characterized in that**
the control apparatus (7), upon detection of an object (10, 10a, 10b, 10c, 10d, 10e) in the first secondary corridor (13), is configured to set the travel parameter such that the travel speed of the autonomously moving transport system (1):
a) is higher with an increasing distance of the object (10, 10a, 10b, 10c, 10d, 10e) from the autonomously moving transport system (1); and/or
b) is lower with an increasing speed of the object (10, 10a, 10b, 10c, 10d, 10e) in the direction of the travel route (11) of the autonomously moving transport system (1); and/or
c) is higher with an increasing speed of the object (10, 10a, 10b, 10c, 10d, 10e) away from the travel route (11) of the autonomously moving transport system (1).

2. An autonomously moving transport system (1) according to claim 1,
wherein the control apparatus (7) is configured to set the travel parameter in the case of a detected object (10, 10a, 10b, 10c, 10d, 10e) in the travel corridor (12) such that the transport system (1):
a) stops;
b) reduces its speed relative to a maximum permitted speed for the current position on the travel route (11); and/or
c) travels at the maximum permitted speed for the current position on the travel route (11).

3. An autonomously moving transport system (1) according to claim 1 or 2, wherein the control apparatus (7) is configured to determine, based on the object information, a distance of the object (10, 10a, 10b, 10c, 10d, 10e) detected in the travel corridor (12) from the autonomously moving transport system (1) in order, in the event that the distance falls below a first distance value, to set the travel parameter such that the transport system (1) stops and, in the event that the distance falls below a second distance value which is greater than the first distance value, to redefine the travel route (11) and thus the travel corridor (12) such that the detected object (10, 10a, 10b, 10c, 10d, 10e) is no longer located in the new travel corridor (12).

4. An autonomously moving transport system (1) according to any one of the preceding claims,
wherein the first secondary corridor (13) directly adjoins the travel corridor (12) towards the side of said travel corridor (12).

5. An autonomously moving transport system (1) according to claim 4, wherein the first secondary corridor (13) directly adjoins the travel corridor (12) at the left side thereof and wherein the first secondary corridor (13) directly adjoins the travel corridor (12) at the right side thereof.

6. An autonomously moving transport system (1) according to any one of the preceding claims,
wherein the object information is:
a) a position of the object (10, 10a, 10b, 10c, 10d, 10e) in the monitored zone (9); and/or
b) a speed of the object (10, 10a, 10b, 10c, 10d, 10e); and/or
c) a direction of movement of the object (10, 10a, 10b, 10c, 10d, 10e).

7. An autonomously moving transport system (1) according to any one of the preceding claims,
wherein the control apparatus (7) is configured to set the travel parameter based on the object information of an object (10, 10a, 10b, 10c, 10d, 10e) detected in the first secondary corridor (13) such that the autonomously moving transport system (1):
a) stops;
b) reduces its speed relative to a maximum permitted speed for the current position on the travel route (11);
c) travels at the maximum permitted speed for the current position on the travel route (11).

8. An autonomously moving transport system (1) according to any one of the preceding claims,
wherein the control apparatus (7), upon detection of an object (10, 10a, 10b, 10c, 10d, 10e) in the first secondary corridor (13), is configured to set the travel parameter such that the travel speed of the autonomously moving transport system (1) can be set in dependence on:
a) the distance of the detected object (10, 10a, 10b, 10c, 10d, 10e) from the autonomously moving transport system (1); and/or
b) the speed of the detected object (10, 10a, 10b, 10c, 10d, 10e); and/or
c) the direction of movement of the detected object (10, 10a, 10b, 10c, 10d, 10e).

9. An autonomously moving transport system (1) according to claim 8,
wherein the travel speed of the autonomously moving transport system (1) and:
a) the distance of the detected object (10, 10a, 10b, 10c, 10d, 10e); and/or
b) the speed of the detected object (10, 10a, 10b, 10c, 10d, 10e); and/or
c) the direction of movement of the detected object (10, 10a, 10b, 10c, 10d, 10e)
are linked to one another via a linear or non-linear function, in particular a quadratic or logarithmic function.

10. An autonomously moving transport system (1) according to any one of the preceding claims,
wherein the control apparatus (7), upon detection of an object (10, 10a, 10b, 10c, 10d, 10e) in the first secondary corridor (13), is configured in the event that:
a) a distance between the object (10, 10a, 10b, 10c, 10d, 10e) and the autonomously moving transport system (1) is smaller than a first distance value, to set the travel parameter such that the autonomously moving transport system (1) stops;
b) a distance between the object (10, 10a, 10b, 10c, 10d, 10e) and the autonomously moving transport system (1) is greater than the first distance value and smaller than a second distance value, to set the travel parameter for the speed of the autonomously moving transport system (1) in dependence on the distance, wherein the speed value is selected as greater as the distance increases;
c) a distance between the object (10, 10a, 10b, 10c, 10d, 10e) and the autonomously moving transport system (1) is greater than the second distance value, to set the travel parameter for the speed of the autonomously moving transport system (1) to a maximum permitted speed value for the current position on the travel route (11).

11. An autonomously moving transport system (1) according to any one of the preceding claims,
wherein the control apparatus (7) is configured to also divide the monitored zone (9) at least into a second secondary corridor (14), wherein the first secondary corridor (13) is arranged between the travel corridor (12) and the second secondary corridor (14), and wherein
the control apparatus (7) is configured, on a detection of an object (10, 10a, 10b, 10c, 10d, 10e) in the second secondary corridor (14) that comprises the same distance from the autonomously moving transport system (1) and/or the same speed and/or the same direction of movement as an object (10, 10a, 10b, 10c, 10d, 10e) which is detected in the first secondary corridor (13), to adapt a travel parameter such that the speed at which the autonomously moving transport system (1) moves is higher if such an object (10, 10a, 10b, 10c, 10d, 10e) is detected in the second secondary corridor (14) than if it is detected in the first secondary corridor (13).

12. An autonomously moving transport system (1) according to any one of the preceding claims,
wherein the control apparatus (7) is configured to adapt the travel parameter, in particular the speed, also in dependence on an intensity value of the obstacle recognition device (8) and/or a noise of the obstacle recognition device (8) and/or a reflector recognition of the obstacle recognition device (8) and/or a fog recognition by the obstacle recognition device (8).

13. An autonomously moving transport system (1) according to any one of the preceding claims,
wherein the control apparatus (7) is configured to transmit at least the travel corridor (12) to the obstacle recognition device (8).

14. A method for operating an autonomously moving transport system (1), in particular for transporting goods (2), comprising a control apparatus (7), an obstacle recognition device (8) and a drive unit (5), having the following method steps:
- moving (S₁) the autonomously moving transport system (1) along a travel route (11) with a specific travel parameter;
- detecting (S₂) an object (10, 10a, 10b, 10c, 10d, 10e) in a monitored zone (9) of the autonomously moving transport system (1) and transmitting object information to the control apparatus (7);
- dividing (S₃) the monitored zone (9) into a travel corridor (12) and at least one first secondary corridor (13), wherein the travel route (11) runs through the travel corridor (12);
- determining (S₄), based on the object information, whether the detected object (10, 10a, 10b, 10c, 10d, 10e) is located in the travel corridor (12) or in the at least one first secondary corridor (13);
- adapting (S₅) the travel parameter differently depending on whether the object (10, 10a, 10b, 10c, 10d, 10e) is located in the first secondary corridor (13) or in the travel corridor (12),
**characterized in that**
the control apparatus (7), upon detection of an object (10, 10a, 10b, 10c, 10d, 10e) in the first secondary corridor (13), sets the travel parameter such that the travel speed of the autonomously moving transport system (1):
a) is higher with an increasing distance of the object (10, 10a, 10b, 10c, 10d, 10e) from the autonomously moving transport system (1); and/or
b) is lower with an increasing speed of the object (10, 10a, 10b, 10c, 10d, 10e) in the direction of the travel route (11) of the autonomously moving transport system (1); and/or
c) is higher with an increasing speed of the object (10, 10a, 10b, 10c, 10d, 10e) away from the travel route (11) of the autonomously moving transport system (1).

## Revendications

1. Système de transport autonome (1), en particulier pour le transport de marchandises (2), comprenant un dispositif de commande (7), un dispositif de détection d'obstacles (8) et une unité d'entraînement (5), l'unité d'entraînement (5) étant conçue pour déplacer le système de transport autonome (1) le long d'un itinéraire (11) avec un paramètre de circulation défini,
le dispositif de détection d'obstacles (8) étant conçu pour détecter un objet (10, 10a, 10b, 10c, 10d, 10e) dans une zone à surveiller (9) du système de transport autonome (1) et pour transmettre des informations correspondantes sur l'objet au dispositif de commande (7),
le dispositif de commande (7) étant conçu pour subdiviser la zone à surveiller (9) en un couloir de circulation (12) et en au moins un premier couloir secondaire (13), l'itinéraire (11) passant par le couloir de circulation (12),
le dispositif de commande (7) étant en outre conçu pour déterminer, à l'aide des informations sur l'objet, si l'objet détecté (10, 10a, 10b, 10c, 10d, 10e) se trouve dans le couloir de circulation (12) ou dans ledit au moins un premier couloir secondaire (13), et le dispositif de commande (7) étant conçu pour adapter un paramètre de circulation différemment selon que l'objet (10, 10a, 10b, 10c, 10d, 10e) se trouve dans le premier couloir secondaire (13) ou que l'objet (10, 10a, 10b, 10c, 10d, 10e) se trouve dans le couloir de circulation (12),
**caractérisé en ce que**
lorsqu'un objet (10, 10a, 10b, 10c, 10d, 10e) est détecté dans le premier couloir secondaire (13), le dispositif de commande (7) est conçu pour ajuster le paramètre de circulation de telle sorte que la vitesse de circulation du système de transport autonome (1) :
a) est plus élevée à mesure que la distance de l'objet (10, 10a, 10b, 10c, 10d, 10e) par rapport au système de transport autonome (1) augmente ; et/ou
b) est plus faible à mesure que la vitesse de l'objet (10, 10a, 10b, 10c, 10d, 10e) dans la direction de l'itinéraire (11) du système de transport autonome (1) augmente ; et/ou
c) est plus élevée à mesure que la vitesse de l'objet (10, 10a, 10b, 10c, 10d, 10e) en éloignement de l'itinéraire (11) du système de transport autonome (1) augmente.

2. Système de transport autonome (1) selon la revendication 1,
dans lequel, lorsqu'un objet (10, 10a, 10b, 10c, 10d, 10e) est détecté dans le couloir de circulation (12), le dispositif de commande (7) est conçu pour ajuster le paramètre de circulation de telle sorte que le système de transport (1) :
a) s'arrête ;
b) réduit sa vitesse par rapport à une vitesse maximale admissible pour la position actuelle sur l'itinéraire (11) ; et/ou
c) circule à la vitesse maximale admissible pour la position actuelle sur l'itinéraire (11).

3. Système de transport autonome (1) selon la revendication 1 ou 2, dans lequel le dispositif de commande (7) est conçu pour déterminer, à partir des informations sur l'objet, une distance de l'objet (10, 10a, 10b, 10c, 10d, 10e), détecté dans le couloir de circulation (12), par rapport au système de transport autonome (1) afin de, dans le cas où la distance est inférieure à une première valeur de distance, ajuster le paramètre de circulation de telle sorte que le système de transport (1) s'arrête et, dans le cas où la distance est inférieure à une deuxième valeur de distance supérieure à la première valeur de distance, redéfinir l'itinéraire (11) et donc le couloir de circulation (12) de telle sorte que l'objet détecté (10, 10a, 10b, 10c, 10d, 10e) ne se trouve plus dans le nouveau couloir de circulation (12).

4. Système de transport autonome (1) selon l'une des revendications précédentes,
dans lequel le premier couloir secondaire (13) est directement adjacent au couloir de circulation (12) sur le côté de celui-ci.

5. Système de transport autonome (1) selon la revendication 4,
dans lequel le premier couloir secondaire (13) est directement adjacent au couloir de circulation (12) sur son côté gauche, et le premier couloir secondaire (13) est directement adjacent au couloir de circulation (12) sur son côté droit.

6. Système de transport autonome (1) selon l'une des revendications précédentes,
dans lequel les informations sur l'objet sont :
a) une position de l'objet (10, 10a, 10b, 10c, 10d, 10e) dans la zone à surveiller (9) ; et/ou
b) une vitesse de l'objet (10, 10a, 10b, 10c, 10d, 10e) ; et/ou
c) une direction de déplacement de l'objet (10, 10a, 10b, 10c, 10d, 10e).

7. Système de transport autonome (1) selon l'une des revendications précédentes,
dans lequel le dispositif de commande (7) est conçu pour ajuster, à partir des informations sur un objet (10, 10a, 10b, 10c, 10d, 10e) détecté dans le premier couloir secondaire (13), le paramètre de circulation de telle sorte le système de transport autonome (1) :
a) s'arrête ;
b) réduit sa vitesse par rapport à une vitesse maximale admissible pour la position actuelle sur l'itinéraire (11) ;
c) circule à la vitesse maximale admissible pour la position actuelle sur l'itinéraire (11).

8. Système de transport autonome (1) selon l'une des revendications précédentes,
dans lequel, lorsqu'un objet (10, 10a, 10b, 10c, 10d, 10e) est détecté dans le premier couloir secondaire (13), le dispositif de commande (7) est conçu pour ajuster le paramètre de circulation de telle sorte que la vitesse de circulation du système de transport autonome (1) est ajustable en fonction de :
a) la distance de l'objet détecté (10, 10a, 10b, 10c, 10d, 10e) par rapport au système de transport autonome (1) ; et/ou
b) la vitesse de l'objet détecté (10, 10a, 10b, 10c, 10d, 10e) ; et/ou
c) la direction de déplacement de l'objet détecté (10, 10a, 10b, 10c, 10d, 10e).

9. Système de transport autonome (1) selon la revendication 8,
dans lequel la vitesse de circulation du système de transport autonome (1) et :
a) la distance de l'objet détecté (10, 10a, 10b, 10c, 10d, 10e) ; et/ou
b) la vitesse de l'objet détecté (10, 10a, 10b, 10c, 10d, 10e) ; et/ou
c) la direction de déplacement de l'objet détecté (10, 10a, 10b, 10c, 10d, 10e) ;
sont liées l'une à l'autre par une fonction linéaire ou non linéaire, en particulier quadratique ou logarithmique.

10. Système de transport autonome (1) selon l'une des revendications précédentes,
dans lequel, lorsqu'un objet (10, 10a, 10b, 10c, 10d, 10e) est détecté dans le premier couloir secondaire (13), le dispositif de commande (7) est conçu pour, dans le cas où :
a) la distance entre l'objet (10, 10a, 10b, 10c, 10d, 10e) et le système de transport autonome (1) est inférieure à une première valeur de distance, ajuster le paramètre de circulation de telle sorte que le système de transport autonome (1) s'arrête ;
b) une distance entre l'objet (10, 10a, 10b, 10c, 10d, 10e) et le système de transport autonome (1) est supérieure à la première valeur de distance et inférieure à une deuxième valeur de distance, ajuster en fonction de la distance le paramètre de circulation pour la vitesse du système de transport autonome (1), la valeur de vitesse étant choisie plus élevée à mesure que la distance augmente ;
c) une distance entre l'objet (10, 10a, 10b, 10c, 10d, 10e) et le système de transport autonome (1) est supérieure à la deuxième valeur de distance, ajuster le paramètre de circulation pour la vitesse du système de transport autonome (1) à une valeur de vitesse maximale admissible pour la position actuelle sur l'itinéraire (11).

11. Système de transport autonome (1) selon l'une des revendications précédentes,
dans lequel le dispositif de commande (7) est conçu pour subdiviser la zone à surveiller (9) encore au moins en un deuxième couloir secondaire (14), le premier couloir secondaire (13) étant situé entre le couloir de circulation (12) et le deuxième couloir secondaire (14), et, lorsqu'un d'un objet (10, 10a, 10b, 10c, 10d, 10e) est détecté dans le deuxième couloir secondaire (14), objet qui présente la même distance par rapport au système de transport autonome (1) et/ou la même vitesse et/ou la même direction de déplacement qu'un objet (10, 10a, 10b, 10c, 10d, 10e) détecté dans le premier couloir secondaire (13), le dispositif de commande (7) est conçu pour adapter un paramètre de circulation de telle sorte que la vitesse à laquelle circule le système de transport autonome (1) est plus élevée lorsqu'un tel objet (10, 10a, 10b, 10c, 10d, 10e) est détecté dans le deuxième couloir secondaire (14) qu'elle ne l'est lorsqu'il est détecté dans le premier couloir secondaire (13).

12. Système de transport autonome (1) selon l'une des revendications précédentes,
dans lequel le dispositif de commande (7) est conçu pour adapter le paramètre de circulation, en particulier la vitesse, également en fonction d'une valeur d'intensité du dispositif de détection d'obstacles (8) et/ou d'un bruit du dispositif de détection d'obstacles (8) et/ou de la détection d'un réflecteur par le dispositif de détection d'obstacles (8) et/ou de la détection d'un brouillard par le dispositif de détection d'obstacles (8).

13. Système de transport autonome (1) selon l'une des revendications précédentes,
dans lequel le dispositif de commande (7) est conçu pour transmettre au moins le couloir de circulation (12) au dispositif de détection d'obstacles (8).

14. Procédé pour faire fonctionner un système de transport autonome (1), en particulier pour le transport de marchandises (2), comprenant un dispositif de commande (7), un dispositif de détection d'obstacles (8) et une unité d'entraînement (5), comprenant les étapes suivantes consistant à :
- déplacer (S₁) le système de transport autonome (1) le long d'un itinéraire (11) avec un paramètre de circulation défini ;
- détecter (S₂) un objet (10, 10a, 10b, 10c, 10d, 10e) dans une zone à surveiller (9) du système de transport autonome (1) et transmettre une information sur l'objet au dispositif de commande (7) ;
- subdiviser (S₃) de zone à surveiller (9) en un couloir de circulation (12) et en au moins un premier couloir secondaire (13), l'itinéraire (11) passant par le couloir de circulation (12) ;
- déterminer (S₄) à partir des informations sur l'objet si l'objet détecté (10, 10a, 10b, 10c, 10d, 10e) se trouve dans le couloir de circulation (12) ou dans ledit au moins un premier couloir secondaire (13) ;
- adapter (S₅) le paramètre de circulation différemment selon que l'objet (10, 10a, 10b, 10c, 10d, 10e) se trouve dans le premier couloir secondaire (13) ou dans le couloir de circulation (12),
**caractérisé en ce que**
lorsqu'un objet (10, 10a, 10b, 10c, 10d, 10e) est détecté dans le premier couloir secondaire (13), le dispositif de commande (7) ajuste le paramètre de circulation de telle sorte que la vitesse de circulation du système de transport autonome (1) :
a) est plus élevée à mesure que la distance de l'objet (10, 10a, 10b, 10c, 10d, 10e) par rapport au système de transport autonome (1) augmente ; et/ou
b) est plus faible à mesure que la vitesse de l'objet (10, 10a, 10b, 10c, 10d, 10e) dans la direction de l'itinéraire (11) du système de transport autonome (1) augmente ; et/ou
c) est plus élevée à mesure que la vitesse de l'objet (10, 10a, 10b, 10c, 10d, 10e) en éloignement de l'itinéraire (11) du système de transport autonome (1) augmente.
